# DEMANDE DE BREVET EUROPEEN

(11) **EP 1 273 999 A1**
(43) Date de publication de la demande: **08.01.2003**
(21) Numéro de dépôt: 02291566.4
(22) Date de dépôt: 24.06.2002
(51) Int. Cl.: G06F 1/00

(54) **Procédé et produit programme d'autorisation d'utilisation de logiciel**

(30) Priorité: 03.07.2001 FR 0108810
(71) Demandeur: Netquartz, 92737 Nanterre Cedex (FR)
(72) Inventeur: Wallace, Iain, 75116 Paris (FR); Levavasseur, Bertrand, 78810 Feucherolles (FR); Pavlin, Dominique, 78480 Verneuil/Seine (FR); Bouilhol, Christophe, 78400 Chatou (FR)
(74) Mandataire: Fruchard, Guy

(57) **Abrégé**

L'invention concerne un procédé de communication personnalisée en relation avec différentes applications informatiques et le produit programme correspondant, le procédé comportant les étapes d'associer aux différentes applications (2) une interface commune (3) adaptée à être configurée pour contenir des données d'identification (6) de l'interface commune, de vérifier lors d'une implantation de chaque application (2) sur un ordinateur la présence de l'interface commune (3), et d'effectuer automatiquement une liaison de l'application (2) avec l'interface commune (3) lorsque l'interface commune (3) est déjà installée, d'assurer une liaison de l'interface commune (3) avec un serveur (4) préalablement au lancement d'une application (2), et de transmettre au serveur (4) une partie au moins des données d'identification (6) de l'interface commune (3).

## Description

La présente invention concerne un procédé de communication personnalisée en relation avec différentes applications informatiques implantées sur un ordinateur utilisateur.

On sait que pour favoriser la diffusion des applications informatiques il est nécessaire de communiquer avec les utilisateurs de façon personnalisée en fonction de leurs habitudes afin que ces utilisateurs soient plus sensibles aux messages qui leur sont adressés. Il est également utile de mettre des applications gratuitement à la disposition des utilisateurs afin de leur permettre d'effectuer des tests. Habituellement, cette mise à disposition permet à l'utilisateur de vérifier si l'application concernée présente un intérêt pour lui mais ne donne aucune indication à l'éditeur sur le nombre de versions test qui ont été utilisées ou sur les problèmes qui ont pu être rencontrés.

On connaît par ailleurs du document WO 00/49483 un procédé d'établissement d'un lien entre un utilisateur et un éditeur, ce procédé comportant les étapes d'établir automatiquement une connexion avec un serveur distant lors de chaque mise en service d'une application et d'échanger avec le serveur des informations en relation avec l'application en service. Ce procédé permet l'établissement d'un lien entre l'éditeur et l'utilisateur en relation avec chaque application prise séparément mais ne permet pas d'effectuer des recoupements entre les différents centres d'intérêt de l'utilisateur ou les difficultés rencontrées par celui-ci selon les applications concernées, d'autant plus que le même utilisateur peut, par inadvertance ou intentionnellement, s'identifier de différentes façons en relation avec les différentes applications.

Un but de l'invention est de proposer un procédé de communication personnalisée en relation avec différentes applications informatiques sur un même ordinateur utilisateur.

Selon l'invention on propose un procédé comportant les étapes d'associer aux différentes applications une interface commune adaptée à être configurée pour contenir des données d'identification de l'interface commune pour permettre un lancement d'une application, de vérifier lors d'une implantation de chaque application sur un ordinateur utilisateur la présence de l'interface commune, d'effectuer automatiquement une liaison de l'application avec l'interface commune lorsque celle-ci est déjà installée, d'assurer une liaison de l'interface commune avec un serveur lors du lancement d'une application et de transmettre au serveur une partie au moins des données d'identification de l'interface commune.

Il est ainsi possible d'assurer dans le serveur un suivi de l'utilisation qui est faite des différentes applications par un utilisateur et de tenir des statistiques des utilisations effectuées par les différents utilisateurs pour en tirer des enseignements pour la diffusion de messages ciblés correspondant à un profil de l'utilisateur destinataire de ces messages, en particulier pour adresser à l'utilisateur des messages personnalisés en relation avec les différentes applications qu'il détient, par exemple des conseils techniques en relation avec l'utilisation combinée de deux applications ou des messages publicitaires sur les produits pouvant venir utilement compléter la combinaison des applications déjà implantées.

En outre, pour un utilisateur qui a déjà procédé à l'implantation d'une première application associée à l'interface commune, l'implantation d'une nouvelle application est facilitée par le fait qu'il n'est pas nécessaire de saisir les données d'identification déjà associées à l'interface commune.

En outre, l'identification unique dans l'interface commune empêche un utilisateur malveillant d'utiliser simultanément deux applications pour lesquelles il souhaiterait avoir des identifications différentes faisant échec aux limitations d'utilisation correspondantes des applications.

Selon une version avantageuse de l'invention, les données d'identification sont non modifiables en dehors d'une première implantation de l'interface commune.

Ainsi, la modification de l'identification de l'interface commune ne peut être effectuée qu'à condition de désinstaller toutes les applications de sorte qu'un utilisateur malveillant souhaitant faire échec aux limitations d'utilisation gratuite d'une des applications devra supprimer toutes les autres applications, ce qui entraînera des manipulations longues et fastidieuses et lui fera perdre des droits qu'il a acquis sur certaines applications en particulier dans le cas d'un téléchargement à titre onéreux d'une des applications.

De préférence, le procédé comporte l'étape d'effectuer dans le serveur un contrôle des droits d'utilisation de l'application et d'autoriser ou interdire le lancement de l'application en fonction de ce contrôle.

Par ailleurs, pour assurer une gestion de messages personnalisés il est généralement nécessaire de tenir des fichiers dans lesquels sont mémorisés des renseignements relatifs à chaque utilisateur. Toutefois la tenue de ces fichiers est très lourde et est en outre soumise à des réglementations de plus en plus strictes afin de préserver la liberté des utilisateurs.

Selon un mode de mise en oeuvre de l'invention, on prévoit en outre les étapes d'associer à l'interface commune implantée sur un ordinateur utilisateur des données de sélection propres à l'utilisateur et aux applications associées à cette interface commune, d'émettre depuis le serveur différent messages respectivement en relation avec différentes données de sélection et de sélectionner automatiquement dans chaque ordinateur utilisateur les messages correspondant aux données de sélection contenues dans l'interface commune lors d'un lancement ou d'un fonctionnement d'une application associée. Les fichiers tenus par le serveur sont alors limités aux informations nécessaires pour contrôler l'accès des différents utilisateurs aux applications correspondantes de sorte que les informations propres restent strictement confidentielles.

Le procédé comporte en outre de préférence l'étape d'établir au moyen de l'interface commune une liaison entre le serveur et une messagerie.

L'invention concerne également un produit programme stocké sur un moyen de stockage lisible par un ordinateur et apte à mettre en oeuvre le procédé selon l'invention.

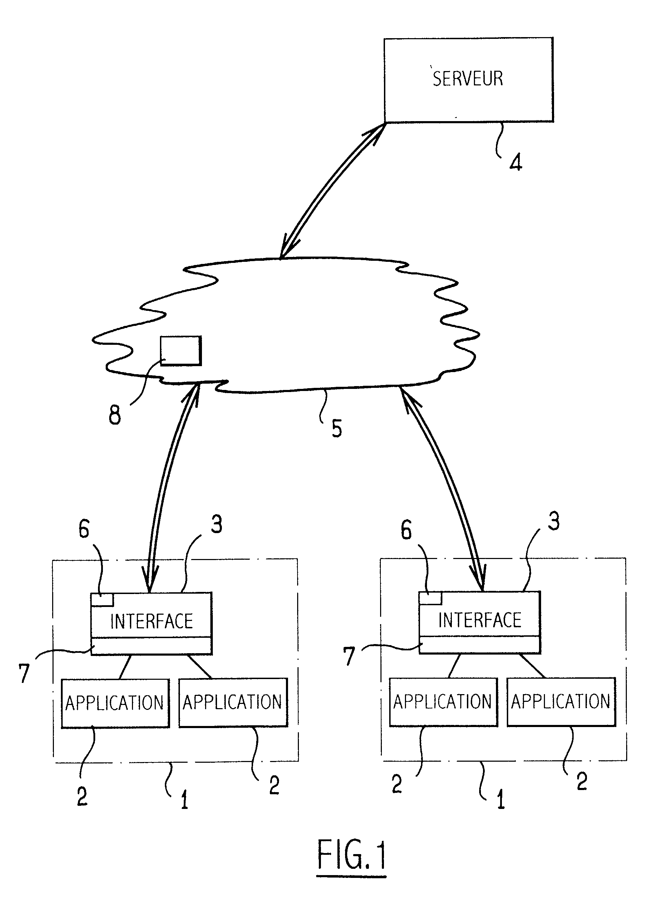

D'autres caractéristiques et avantages de l'invention apparaîtront à la lecture de la description qui suit d'un mode de mise en oeuvre particulier non limitatif qui va maintenant être décrit en relation avec la figure unique ci-jointe qui est un schéma par blocs illustrant les moyens de mise en oeuvre du procédé selon l'invention.

En relation avec la figure, le système mettant en oeuvre le procédé de l'invention comprend des ordinateurs utilisateurs 1 dans chacun desquels sont implantées différentes applications 2 qui, dans chaque ordinateur, sont associées à une interface commune 3. Les interfaces communes 3 comportent en outre des moyens permettant d'assurer une liaison avec un serveur 4 par l'intermédiaire d'un réseau 5.

Selon l'invention chaque application 2 est fournie avec des moyens d'implantation de l'interface commune 3. Lors de l'implantation d'une première application sur un ordinateur utilisateur 1, l'interface commune 3 est tout d'abord installée et des données d'identification 6 lui sont associées. Les données d'identification 6 sont mémorisées dans l'ordinateur utilisateur 1 et ne peuvent pas être modifiées en dehors de cette première implantation sans risquer la perte des droits d'utilisation des applications déjà installées. L'application est ensuite installée en l'associant automatiquement à l'interface commune 3.

Lors de l'implantation de chaque application une vérification est effectuée pour déterminer si l'interface commune 3 est déjà présente sur l'ordinateur. Dans le cas où celle-ci est déjà installée, la nouvelle application est automatiquement connectée à l'interface commune sans permettre une nouvelle identification de l'interface. On notera que pour réduire les risques de fraude, les données d'identification de l'interface peuvent comprendre soit des données saisies par l'utilisateur lors de l'installation, soit des données introduites automatiquement par le programme d'installation telles qu'un numéro de série de l'application dans le cas d'un téléchargement, ou encore une combinaison de données saisies et de données chargées automatiquement à partir du serveur. A cet effet le programme d'installation de l'interface et de l'application associée comprend de préférence des moyens de mise en communication avec le serveur 4 au moment de l'installation.

L'interface commune 3 est également adaptée à être associée à des données de sélection 7 propres à l'utilisateur et aux applications associées à l'interface commune. Les données de sélection 7 peuvent être de différentes natures. Elles peuvent par exemple être relatives au mode d'acquisition de l'application (téléchargement, CD ROM...) ou au lieu d'acquisition de l'application, ou encore à l'expérience de l'utilisateur. Les données de sélection 7 peuvent également comprendre des données relatives à l'utilisation effectuée pour chaque application en particulier la fréquence d'utilisation de chaque application, les fonctions utilisées dans chaque application, les erreurs de manipulation..., ces données pouvant être acquises soit automatiquement à partir du support ayant permis l'installation de l'application soit par une saisie par l'utilisateur en relation avec des messages affichés automatiquement par l'interface dans certaines circonstances ou à l'initiative de l'utilisateur, la manipulation de l'interface par l'utilisateur pouvant être facilitée par des icônes standards pour les différentes applications. Les données de sélection peuvent également être complétées par le serveur en relation avec une donnée saisie par l'utilisateur. Par exemple lorsque l'utilisateur saisit le numéro de série mentionné sur un CD ROM, le serveur 4 peut faire le lien avec le mode de distribution du CD ROM portant ce numéro de série (à l'occasion d'une foire, envoi par correspondance, coordonnées du distributeur détaillant), et compléter de façon correspondante les données de sélection de l'interface commune. Les données de sélection peuvent être mémorisées soit sur l'ordinateur utilisateur soit dans le serveur 4 ou encore en partie dans l'ordinateur utilisateur et en partie dans le serveur, les données de sélection de caractère moins personnel étant par exemple mémorisées sur le serveur tandis que les données plus personnelles sont conservées sur l'ordinateur utilisateur.

Lors de chaque lancement d'une application l'interface commune 3 est automatiquement activée et une liaison est établie avec le serveur 4. Cette liaison est de préférence utilisée tout d'abord pour effectuer un contrôle de l'autorisation d'accès de l'ordinateur utilisateur à l'application considérée. Du fait de l'identification unique de l'utilisateur dans l'interface commune, une application ne peut être transférée à un autre utilisateur qu'en association avec les autres applications associées à la même interface et ne peut pas être intégrée à une interface contenant une autre identification. De ce fait il n'est pas possible de transférer une application à un tiers sans lui faire perdre les droits qu'il détient sur ses propres applications. A cet effet le lien avec le serveur 4 peut être utilisé pour mettre en oeuvre le procédé d'utilisation sécurisé tel que décrit dans le document WO 00/49483.

Dans le mode de mise en oeuvre préféré, l'interface commune 3 comprend des moyens permettant l'ouverture d'une fenêtre dans laquelle sont affichés des messages provenant du serveur 4. Ces messages comprennent bien entendu des informations en relation directe avec l'identification de l'interface, par exemple pour informer l'utilisateur que ses droits d'utilisation sont venus à expiration. Ils comprennent également des messages en relation avec des données de sélection associées à l'interface commune, par exemple l'indication que le détaillant chez lequel une application a été achetée antérieurement effectue une promotion sur d'autres applications, ou encore les dates de la prochaine foire à laquelle une application a été acquise.

Selon l'invention on prévoit également d'émettre depuis le serveur 3 différents messages respectivement en relation avec différentes données de sélection par exemple en associant aux messages diffusés un code correspondant à des données de sélection en relation avec le message. Les différents messages sont ensuite diffusés à toutes les interfaces communes, et les messages qui correspondent aux données de sélection de l'interface concernée sont sélectionnés automatiquement dans chaque interface commune 3. A titre d'exemple, lorsque l'interface 3 comprend des données relatives à la localisation de l'ordinateur utilisateur, le serveur émet différents messages chacun en relation avec une localisation particulière et l'interface sélectionne les messages relatifs à des événements locaux correspondants à ses données de localisation. Il est également possible de mémoriser en relation avec l'interface 3 des informations relatives à la nature des applications implantées sur l'ordinateur concerné et d'afficher de façon sélective des informations en relation avec ces applications, qu'il s'agisse de conseils d'utilisation ou de messages publicitaires sur les applications pouvant compléter les applications déjà installées. Les messages ainsi diffusés peuvent encore être en relation avec les difficultés de manipulation rencontrées par l'utilisateur, la sélection de ces messages étant réalisée à partir de données de sélection associées à l'interface 3 à l'occasion des manipulations. Les différents messages peuvent être divisés en différentes catégories (information produit, support technique...) et diffusés par le serveur 4 soit automatiquement soit à la demande d'un utilisateur en cliquant sur l'icône correspondante, la sélection automatique des messages en relation avec les données de sélection étant dans les deux cas effectuée par l'interface commune 3. Les messages peuvent également être en relation avec des produits qui peuvent être achetés en ligne. Dans ce cas la fenêtre d'affichage de l'interface comporte de préférence un bouton permettant un accès à la boutique accessible de façon immédiate dans le serveur en raison de la connexion déjà établie avec celui-ci. On peut de la même manière prévoir sur la fenêtre de l'interface un bouton permettant d'accéder directement au support technique.

Lorsque l'utilisateur a saisi dans les données de configuration l'adresse d'une messagerie 8 à laquelle l'ordinateur utilisateur peut avoir accès, il est également possible de faire envoyer par le serveur des messages qui, lorsqu'ils sont sélectionnés par l'interface 3, sont envoyés dans la boîte de réception de la messagerie 8 et sont signalés à l'utilisateur sur la fenêtre d'affichage de l'interface 3. On entend par messagerie au sens de l'invention non seulement une messagerie implantée dans un réseau externe, tel que le réseau internet, mais également une boite aux lettre implantée sur l'ordinateur utilisateur et fonctionnant sous le contrôle de l'interface pour y effectuer des transferts de données.

L'invention concerne également un produit programme permettant de mettre en oeuvre le procédé selon l'invention.

A cet effet le produit programme est stocké sur un moyen de stockage lisible par un ordinateur et comprend au moins une application et l'interface commune associée et des moyens d'implantation de cette application et de l'interface commune associée sur un ordinateur, ces moyens d'implantation comprenant des moyens de vérification de la présence de l'interface commune et des moyens pour effectuer automatiquement une liaison de l'application avec l'interface commune lorsque celle-ci est déjà installée, le produit programme contenant en outre des moyens permettant une configuration de l'interface commune 3 pour introduire des données d'identification dans l'interface et des moyens permettant de provoquer l'établissement d'une liaison de l'interface commune 3 avec le serveur 4 préalablement au lancement d'une application et pour transmettre au serveur 4 les données d'identification de l'interface, ainsi que des moyens pour mémoriser dans l'interface commune 3 des données de sélection propres aux applications associées à cette interface commune et sélectionner automatiquement parmi des messages reçus du serveur 4 ceux qui correspondent aux données de sélection de chaque application lors de son lancement ou de son déroulement.

Bien entendu, l'invention n'est pas limitée au mode de mise en oeuvre décrit et on peut y apporter des variantes de réalisation sans sortir du cadre de l'invention tel que défini par les revendications.

En particulier bien que l'invention ait été décrite en relation avec un mode de mise en oeuvre particulier selon lequel les données d'identification associées à l'interface commune ne peuvent pas être modifiées en dehors d'une première implantation de l'interface commune, le procédé selon l'invention peut être également mis en oeuvre en laissant libre une modification des données d'identification mais en effectuant automatiquement un contrôle des autorisations d'accès de toutes les applications associées à l'interface commune lors de chaque connexion au serveur 4 et d'interrompre définitivement le fonctionnement de toute application qui n'est pas autorisée en relation avec les données d'identification en cours. L'utilisateur qui modifie les données d'identification pour profiter à nouveau d'une version test qu'il a déjà utilisée sous une identification antérieure perd alors instantanément les droits qu'il a acquis sur toutes les applications associées à l'interface commune.

En outre bien que l'invention ait été décrite en liaison avec un système comportant une mise en relation avec un serveur, la partie de sécurisation d'utilisation du procédé selon l'invention peut être mise en oeuvre dans un ordinateur individuel non connecté à un réseau, l'interface 3 contenant alors des moyens permettant de mémoriser les paramètres d'autorisation d'accès à une application de sorte que ces paramètres ne peuvent être modifiés que par l'implantation d'une version autorisée d'une application.

Bien que l'invention ait été décrite en relation avec une sélection de messages par l'interface, l'interface commune peut également servir à transmettre au serveur toutes les informations nécessaires à l'envoi de messages ciblés qui sont adressés exclusivement à leur destinataire.

## Revendications

1. Procédé de communication personnalisée en relation avec différentes applications informatiques (2) sur un ordinateur utilisateur (1), **caractérisé en ce qu'**il comporte les étapes d'associer aux différentes applications (2) une interface commune (3) adaptée à être configurée pour contenir des données d'identification (6) de l'interface commune, de vérifier lors d'une implantation de chaque application (2) sur un ordinateur la présence de l'interface commune (3), d'effectuer automatiquement une liaison de l'application (2) avec l'interface commune (3) lorsque l'interface commune (3) est déjà installée, d'assurer une liaison de l'interface commune (3) avec un serveur (4) lors du lancement d'une application (2), et de transmettre au serveur (4) une partie au moins des données d'identification (6) de l'interface commune (3).

2. Procédé selon la revendication 1, **caractérisé en ce qu'**il comporte l'étape d'effectuer dans le serveur (4) un contrôle des droits d'utilisation de l'application (2) et d'autoriser ou interdire le lancement de l'application en fonction de ce contrôle.

3. Procédé selon la revendication 1, **caractérisé en ce que** les données d'identification sont non modifiables en dehors d'une première implantation de l'interface commune (3).

4. Procédé selon la revendication 1, **caractérisé en ce qu'**il comporte les étapes de mémoriser dans l'ordinateur utilisateur (1) des données de sélection (7) associées à l'interface commune (3), d'émettre depuis le serveur (4) différents messages respectivement en relation avec différentes données de sélection (7), et de sélectionner automatiquement dans chaque ordinateur utilisateur (1) les messages correspondant aux données de sélection associées à l'interface commune 3 lors d'un lancement ou d'un fonctionnement d'une application associée à l'interface commune.

5. Procédé selon la revendication 4, **caractérisé en ce qu'**il comporte l'étape d'établir au moyen de l'interface commune (3) une liaison entre le serveur (4) et une messagerie (8).

6. Produit programme stocké sur un moyen de stockage lisible par un ordinateur (1), **caractérisé en ce qu'**il comprend au moins une application (2) associée à une interface commune (3) et des moyens d'implantation de cette application et de l'interface commune (3) associée sur un ordinateur, ces moyens d'implantation comprenant des moyens de vérification de la présence de l'interface commune et des moyens pour effectuer automatiquement une liaison de l'application avec l'interface commune lorsque celle-ci est déjà installée, le produit programme contenant en outre des moyens permettant une configuration de l'interface commune (3) pour introduire des données d'identification dans l'interface commune et des moyens permettant de provoquer l'établissement d'une liaison de l'interface commune (3) avec un serveur (4) lors du lancement d'une application et pour transmettre au serveur (4) une partie au moins des données d'identification de l'interface commune (3).

7. Produit programme selon la revendication 6, **caractérisé en ce qu'**il comprend des moyens pour interdire une modification des données d'identification en dehors d'une première implantation de l'interface commune (3).

8. Produit programme selon la revendication 6, **caractérisé en ce qu'**il comporte des moyens pour mémoriser en relation avec l'interface commune (3) des données de sélection associées à cette interface commune et sélectionner automatiquement parmi des messages reçus du serveur (4) ceux qui correspondent aux données de sélection de chaque application lors de son lancement ou de son déroulement.
